## Europäisches Patentamt
## European Patent Office
## Office européen des brevets

(19)

(11) Numéro de publication: **0 188 960**
**B1**

(12) # FASCICULE DE BREVET EUROPÉEN

(45) Date de publication du fascicule du brevet:
25.01.89

(51) Int. Cl.⁴: **G 01 D 5/34,** G 01 D 5/26

(21) Numéro de dépôt: **85402591.3**

(22) Date de dépôt: **20.12.85**

(54) Codeur optique de repérage de position.

(30) Priorité: **21.12.84 FR 8419713**

(43) Date de publication de la demande:
**30.07.86 Bulletin 86/31**

(45) Mention de la délivrance du brevet:
**25.01.89 Bulletin 89/4**

(84) Etats contractants désignés:
**AT BE CH DE GB IT LI LU NL SE**

(56) Documents cité:
GB-A-896 092
GB-A-2 071 896
US-A-3 502 414

PATENTS ABSTRACTS OF JAPAN, vol. 5, no. 182 (P-90) 854 , 20 novembre 1981
PATENTS ABSTRACTS OF JAPAN, vol. 5, no. 182 (P-90) 854 , 20 novembre 1981

(73) Titulaire: **M.C.B., 11, rue Pierre Lhomme, F-92400 Courbevoie (FR)**

(72) Inventeur: **Gambs, Paul, 132, Chemin du Petit Bois, F-69130 Ecully (FR)**
Inventeur: **Taillebois, Jacques, Résidence Brigitte 23, rue Ebisoires, F-78370 Plaisir (FR)**
Inventeur: **Renaud, Jean- Marie, 17, rue Pierre Brossolette, F-92400 Courbevoie (FR)**
Inventeur: **Perrot, Jean- Claude, 8, Allée des Primevères, F-95370 Montigny en Cormeilles (FR)**

(74) Mandataire: **Lecca, Jean, CABINET PLASSERAUD 84, rue d'Amsterdam, F-75009 Paris (FR)**

## Description

La présente invention concerne les codeurs optiques de repérage par diascopie de la position d'un élément mobile.

On sait qu'un tel codeur comprend, d'une part, un disque ou une réglette comportant plusieurs pistes, chacune avec une succession de zones opaques et de zones transparentes fines alternantes et, d'autre part, un ensemble de lecture comportant, entre autres, une source de lumière et un ou plusieurs photodétecteurs qui détectent pour chaque piste si c'est une zone opaque ou une zone transparente qui est présente devant le ou les photodétecteurs; le disque ou la réglette, d'une part, et l'ensemble de lecture, d'autre part, sont mobiles l'un par rapport à l'autre soit en rotation (cas du disque), soit en translation (cas de la reglette). De plus au(x) photodétecteur(s) peut être associée une unité électronique de traitement des signaux émis par le(s) photodétecteur(s).

Généralement l'ensemble des moyens précisés se trouve disposé dans un volume réduit, ou bien, lorsque ces moyens sont éloignés les uns des autres, des conducteurs assurent les liaisons électriques, notamment entre les moyens d'alimentation en énergie, le système opto-électronique constituant ensemble de lecture et l'unité électronique de traitement des signaux.

Dans certains applications il existe une distance non négligeable entre l'ensemble de lecture et l'unité électronique de traitement des signaux. Il y a lieu d'éviter toute liaison électrique entre ces deux ensembles du fait qu'une telle liaison risquerait d'être perturbée par des parasites, notamment en cas de transmission analogique des signaux entre l'ensemble de lecture et l'unité électronique de traitement des signaux.

Le brevet USA n° 3 502 414 décrit un système électrique optique pour mesurer le déplacement en mettant en oeuvre: un disque avec une échelle graduée, qui se déplace par rapport à plusieurs réticules décalés en position; des lentilles disposées en regard de chaque réticule entre le plan des réticules et le plan du disque, les graduations de l'échelle définissent plusieurs valves lumineuses; et des fibres optiques, en nombre égal au nombre des réticules et donc au nombre des lentilles, transmettent la lumière vers le disque à travers les réticules et les lentilles. La conjugaison des réticules sur le disque par le truchement des lentilles est en fait utopique pour réaliser un capteur de la technique actuelle qui doit être de très faible dimension en outre, pour réaliser des images de haute qualité on doit réaliser en fait des conditions de collimation semblables à celles mentionnées comme non appropriées dans le brevet n° 3 502 414, colonne 4 lignes 40 à 44, car, si les conditions prévues dans ces lignes ne sont pas remplies, les réticules seront représentés sur le disque, en raison des phénomènes de diffraction dus à l'insuffisante ouverture numérique des faisceaux transmis par les fibres optiques, par une véritable bouillie lumineuse qui est incapable de moduler l'énergie lumineuse reçue par les récepteurs; par ailleurs dans un système selon le brevet n° 3 502 414 le contrôle d'équilibrage des énergies entre les différentes voies du faisceau de fibres optiques pose des problèmes très difficiles à résoudre. En outre et surtout, il y a lieu de noter que les fibres optiques sont internes au capteur de ce brevet USA et ne concernent nullement la transmission d'informations élaborées par le capteur vers une unité de traitement centralisée.

Au contraire l'invention utilise des fibres optiques de transmission non galvanique d'informations entre un capteur et une unité de traitement centralisée.

La présente invention vise à permettre de réaliser un codeur optique de repérage par diascopie de la position d'un élément mobile éloigné de l'unité électronique de traitement des signaux qui représentent cette position, en évitant tout parasite.

Conformément à l'invention, on réalise un codeur de repérage de position qui est constitué en trois parties, à savoir:
- un capteur de données qui coopère avec l'élément porteur de code de position comportant les pistes codées optiquement;
- un module opto-électronique avec une unité électronnique de traitement des signaux; et
- des moyens de transmission optique bidirectionnelle à fibre(s) optique(s);
et dont
- ledit capteur comprend, pour coopérer avec l'élément porteur de code de position comportant les pistes codées optiquement, un lecteur opto-électronique, disposé en regard des pistes codées pour recevoir la lumière ayant traversé les zones transparentes desdites pistes et transformant la lumière reçue en signaux électriques, un micro-miroir de modulation par réflexion pouvant pivoter par rapport aux moyens de transmission optique autour d'une position active dans laquelle il renvoie vers ces moyens de transmission optique la lumière reçue de ceux-ci; des moyens d'actionnement pour faire pivoter le micro-miroir en réponse à des signaux électriques émis par ledit lecteur opto-électronique, et une source d'alimentation autonome alimentant le lecteur opto-électronique et les moyens d'actionnement du micro-miroir;
- le module comprend au moins un émetteur opto-électronique de lumière et un lecteur opto-électronique, associé à une unité de traitement pour des signaux électriques émis par ce lecteur opto-électronique en réponse à des signaux lumineux, l'alimentation de l'émetteur opto-électronique et du lecteur opto-électronique du capteur étant assurée par des moyens d'alimentation électrique;
- ledit codeur comporte au moins un coupleur bi-directionnel de faisceau optique; et lesdits moyens de transmission optique comportent au moins une fibre optique, coopérant avec ledit coupleur bi-directionnel, pour appliquer la lumière émise par le ou les émetteurs opto-électroniques du module, d'une part, aux pistes codées optiquement de l'élément porteur de code, et, d'autre part, au micro-miroir du capteur et pour appliquer la lumière renvoyée par le micro-miroir dans sa position active audit lecteur opto-électronique du module.

Avantageusement:
- un système optique est disposé devant le lecteur opto-électronique du capteur et éventuellement devant le lecteur opto-électronique du module;
- un système optique est disposé entre chaque émetteur opto-électronique et la ou les fibres optiques transmettant la lumière émise par cet émetteur;
- la source d'alimentation autonome du capteur est constituée avantageusement par une pile électrique, une cellule photovoltaïque alimentée en lumière extérieure par une fibre optique, ou une source d'alimentation locale par microgénération;
- le coupleur bi-directionnel du faisceau optique est un miroir semi-transparent;
- on prévoit dans le module deux émetteurs opto-électroniqes de lumière coopérant chacun avec au moins une fibre optique des moyens de transmission, au moins une de ces fibres appliquant la lumière émise par le premier émetteur auxdites pistes codées tandis qu'au moins une autre de ces fibres coopère avec ledit coupleur, disposé entre elle et le second émetteur, pour appliquer la lumière émise par ce second émetteur sur le micro-miroir et appliquer la lumière renvoyée par le micro-miroir en position active sur le lecteur du module.

L'invention pourra, de toute façon, être bien comprise à l'aide du complémênt de description qui suit, ainsi que des dessins ci-annexés, lesquels complement et dessins sont, bien entendu, donnés surtout à titre d'indication.

La figure 1 illustre schématiquement l'ensemble du codeur optique de repérage de position doté des perfectionnements selon l'invention, en montrant ses trois unités constitutives, à savoir le capteur, les moyens optiques de transmission et le module.

La figure 2 illustre les composants des trois unités illustrées sur la figure 1.

Selon l'invention et plus spécialement selon celui de ses modes d'application, ainsi que selon ceux des modes de réalisation de ses diverses parties, auxquels il semble qu'il y ait lieu d'accorder la préférence, se proposant, par exemple, de réaliser un codeur optique de repérage de position, on s'y prend comme suit ou d'une manière analogue.

L'invention est décrite ci-après dans un mode de réalisation préféré s'appliquant au repérage d'une position angulaire, l'organe mobile d'axe X - X portant, solidaire de lui en rotation, un disque codé 1 avec plusieurs pistes codées concentriques, chacune avec une succession de très fines zones alternativement opaques et transparentes dans le sens périphérique.

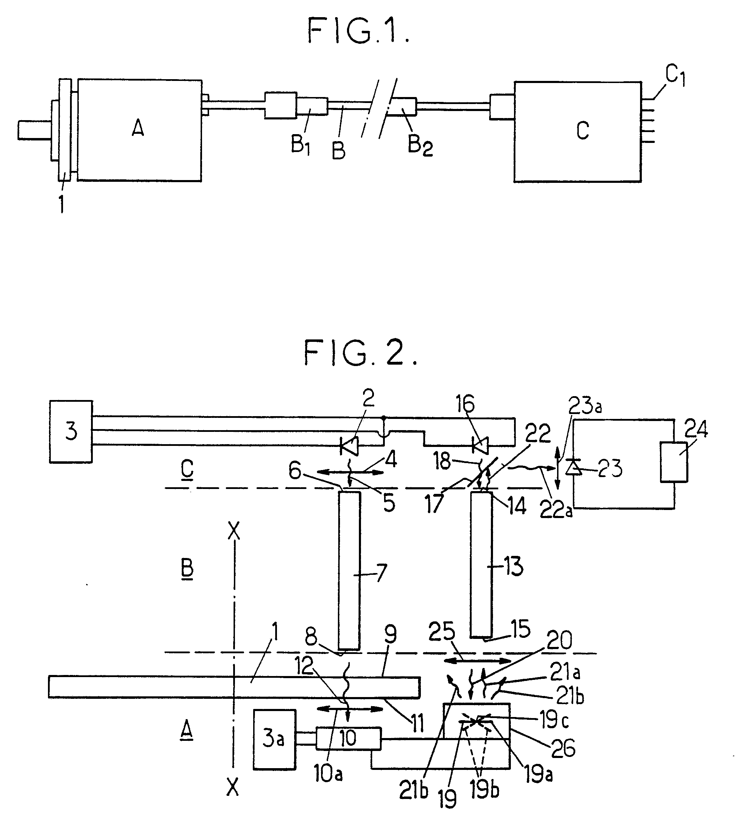

En se référant plus particulièrement à la figure 2, sur laquelle on a séparé par des traits interrompus le capteur A, le système à fibres optiques de transmission lumineuse B, constitué par exemple par un câble optique à deux ou plusieurs fibres, et le module opto-électronique C (ensembles A, B et C que l'on retrouve sur la figure 1), on voit que l'appareil selon l'invention comprend essentiellement:
- un premier émetteur opto-électronique de lumière 2, constitué par exemple par une diode électroluminescente et alimenté par des moyens d'alimentation 3, par exemple extérieurs et constitués par la source générale d'électricité qui est disponible;
- un système optique 4 formant, à partir de la lumière émise par l'émetteur de lumière 2, un faisceau de rayons 5 qui convergent sur la face d'entrée 6 d'une première fibre optique 7 dont la face de sortie 8 est disposée en regard d'une des surfaces 9 du disque codé 1, à savoir en face des pistes codées de ce disque;
- un premier lecteur opto-électronique 10 disposé en regard de l'autre surface 11 du disque codé 1, ce lecteur opto-électronique transformant la lumière 12, reçue depuis la face de sortie 8 de la première fibre optique 7, à travers une zone transparente du disque 1, et rendue convergente sur lui par un système optique 10a, en impulsions électriques qui commandent les moyens d'actionnement 26 d'un micro-miroir 19 comme expliqué ci-dessus, le lecteur opto-électronique 10 et ces moyens actionnement 26 étant alimentés par une source autonome 3a constituée par exemple par une pile électrique, une cellule photovoltaïque alimentée en lumière extérieure par une fibre optique, ou une source d'alimentation locale par microgénération (cette dernière source pouvant avantageusement être formée par un système comportant un solénoïde qui entoure un barreau magnétique, des moyens - et en particulier une capsule manométrique - pour commander le déplacement relatif solénoïde/barreau magnétique dans le système, des moyens redresseurs dont l'entrée est connectée aux bornes du solénoïde, et des moyens de stockage d'énergie électrique connectés à la sortie desdits moyens redresseurs);
- une seconde fibre optique 13 comportant une première extrémité 14 et une seconde extrémité 15;
- un second émetteur opto-électronique de lumière 16, constitué par exemple, comme le premier émetteur 2, par une diode électroluminescente et alimenté à partir de la même source d'alimentation 3 que le premier émetteur 2;
- un coupleur bi-directionnel de faisceau optique, tel qu'un miroir semi-transparent 17, fixe en position et qui transmet au moins une partie de la lumière 18 émise par le second émetteur 16 à l'entrée 14 de la seconde fibre optique 13, cette lumière arrivant à la seconde extrémité 15 de cette fibre 13;

- un micro-miroir 19 de modulation par réflexion pouvant osciller autour de son axe 19c entre deux positions extrêmes 19b (en traits interrompus) en passant à travers une position active 19a (en traits pleins) dans laquelle il renvoie les rayons lumineux 20 reçus à partir du second émetteur 16 (à travers l'élément semi-transparent 17 et la fibre 13) dans la même direction sous forme de rayons réfléchis 21a qui traversent donc en retour la fibre 13 pour frapper, en tant que rayons 22, l'élément semi-transparent 17 qui les réfléchit en partie en tant que rayons 22a, tandis que dans ses autres positions, telles que 19b, le miroir 19 ne renvoie pas les rayons 20 dans la direction 21a, mais dans des directions 21b telles qu'ils ne sont pas reçus par l'extrémité 15 de la seconde fibre optique 13 et ne sont donc pas réfléchis par l'élément semi-transparent 17 (elles peuvent par exemple être reçues par au moins une boîte noire constituant piège à lumière);

- des moyens 26 d'actionnement (constitués par exemple par des électrodes de commande) agissant sur le miroir 19 pour le faire passer d'une position extrême 19b à l'autre position extrême 19b en passant par la position active 19a chaque fois que le premier lecteur opto-électronique 10 leur envoie une impulsion électrique;

- un second lecteur opto-électronique 23 précédé par un système optique 23a (analogue au système optique 12) et constitué par exemple par un photodétecteur, ce lecteur émettant une impulsion électrique en réponse à une impulsion de lumière reçue; et

- une unité de traitement 24 des impulsions produites par la diode 23.

Le codeur peut également comporter un système optique entre la seconde extrémité 15 de la seconde fibre optique 13 et le micro-miroir 19, de manière à régler le flux lumineux entre la fibre optique 13 et le miroir 19 dans les deux sens de propagation, et un système optique (non représenté), analogue au système optique 4, entre l'émetteur 16 et le miroir semi-transparent 17.

En ce qui concerne plus particulièrement le micro-miroir 19 et les moyens d'actionnement 26 de celui-ci, ils peuvent être constitués par un mico-volet réfléchissant en aluminium oscillant autour de son axe 19c, des ressorts le sollicitant normalement dans une position extrême de repos 19b; par contre lorsque les moyens 26 reçoivent une impulsion électrique du premier lecteur 10 excité par le rayonnement 12, le miroir est sollicité pour passer à l'autre position extrême 19b en passant par la position active 19a.

Le micro-volet réfléchissant et les moyens de commande associés peuvent être réalisés par exemple comme décrit dans la demande de brevet n° 8 104 778 (n° de publication 2 478 352) déposée le 10 mars 1981 par CENTRE ELECTRONIQUE HORLOGER S.A., ce qui permet de les obtenir sous la forme d'un élément pouvant être commandé par des impulsions en provenance du premier lecteur 10 avec une dépense réduite en énergie.

On notera que le lecteur opto-électronique 10 comprend plusieurs photodétecteurs (au moins un par piste codée sur le disque 1), un circuit d'amplification et de mise en forme pour les sorties du ou des photodétecteurs associés à chaque piste, et un registre à décalage à entrées parallèles (à savoir une entrée pour chaque piste) et à sortie série, cette unique sortie étant connectée aux moyens de commande 26 du micro-miroir 19.

L'ensemble électronique du lecteur opto-électronique 10 est réalisé en une technologie qui permet au lecteur de consommer une énergie électrique réduite, notamment en une technologie du type CMOS.

Ce lecteur 10 débitera donc en définitive, pour chaque lecture, un groupe d'impulsions électriques et d'absences d'impulsion (en autant de positions qu'il y a de pistes codes), une impulsion électrique correspondant à une zone tansparente et une absence d'impulsion à une zone opaque de la piste correspondant à la position en cause. Les lectures successives se manifestent donc par des groupes successifs d'impulsions et d'absences d'impulsion, une telle impulsion commandant, en réponse à une impulsion de lumière 12 ayant traversé une zone transparente du disque 1, le passage du micro-miroir 19 dans la position 19a, ce qui provoque un rayonnement 21a qui traverse en retour la seconde fibre optique 13 et est renvoyé partiellement par l'élément semi-transparent 17 en tant qu'impulsion lumineuse 22a atteignant le second lecteur 23 qui émet à son tour une impulsion électrique. Les impulsions électriques successives du lecteur 23 sont traitées dans l'unité 24.

Sur la figure 1 on a représenté
- les unités du capteur A avec le disque codé 1, du câble optique B constituant les moyens de transmission à fibres et du module C avec ses sorties C₁ vers les moyens d'utilisation des signaux de sortie du module C; et
- les connecteurs B₁ et B₂ du câble optique B respectivement avec le capteur A et le module C.

Le fonctionnement du codeur selon l'invention comporte une première période de mise en service de l'ordre de 0,5 à 1 seconde, dans le cas d'une génération photovoltaïque de courant en 3a, mais qui peut être de durée différente pour un autre type de source d'énergie.

Cette période de mise en service est suivie par un premier cycle de travail comportant l'activation des deux emetteurs opto-électroniques 2 et 16 et du premier lecteur opto-électronique 10, puis, après verrouillage du code dans ce lecteur 10, la transmission série du code par activation du miroir 19 (par les moyens 26) et du second lecteur opto-électronique 23. Cette période de travail dure environ 2 ms.

On prévoit ensuite un temps de repos ou de recharge de la source d'énergie qui peut être de l'ordre de 10 à 20 ms, temps au bout duquel une nouvelle période de travail peut recommencer. Il en résulte donc que le cycle travail-repos peut recommencer par exemple toutes les 12 à 22 ms environ.

On voit que les fibres optiques 7 et 13 et les systèmes opto-électroniques associés servent à la transmission à distance sans risques de parasites, d'une part, de la lumière émise par les diodes 2 et 16, la fibre 13 servant également au retour de la lumière réfléchie par le micro-miroir 19 dans la position 19a.

Comme il va de soi et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes.

Par exemple le coupleur bi-directionnel 17 pourrait être remplacé par deux coupleurs bi-directionnels disposés l'un entre la surface 8 de la fibre 7 et le disque 1 et l'autre entre la surface 15 de la fibre 13 et le micro-miroir 19, ou bien on pourrait, en conservant le coupleur 17, prévoir un autre coupleur analogue entre l'émetteur 2 et la face 6 de la fibre 7; ces deux variantes mettant en oeuvre deux coupleurs bi-directionnels permettent de supprimer l'émetteur 16 et donc d'avoir un seul émetteur dans le module C.

Par ailleurs, au lieu de prévoir comme position de repos pour le miroir 19 une position extrême 19b, on pourrait prévoir au contraire la position 19a comme position de repos pour le miroir 19, les impulsions électriques engendrées par le lecteur 10 agissant alors sur les moyens ou électrodes d'actionnement 26 pour faire pivoter le miroir 19 à partir de la position 19a; dans ce cas un inverseur électrique peut être prévu entre la sortie du registre à décalage du lecteur 10 et les moyens ou électrodes d'actionnement 26.

**Revendications**

1. Codeur de repérage de position constitué en trois parties, à savoir:
   - un capteur de données (A) qui coopère avec un élément (1) porteur de code de position comportant des pistes codées optiquement;
   - un module opto-électronique (C) avec une unité électronique (24) de traitement des signaux; et
   - des moyens (B) de transmission optique bidirectionnelle à fibre(s) optique(s);
   et dont
   - ledit capteur (A) comprend, pour coopérer avec l'élément (1) porteur de code de position comportant les pistes codées optiquement, un lecteur opto-électronique (10), disposé en regard des pistes codées pour recevoir la lumière ayant traversé les zones transparentes desdites pistes et transformant la lumière reçue en signaux électriques, un micro-miroir (19) de modulation par réflexion pouvant pivoter par rapport aux moyens de transmission optique (8) autour d'une position active (10a) dans laquelle il renvoie vers ces moyens de transmission optique la lumière reçue de ceux-ci; des moyens d'actionnement (26) pour faire pivoter le micro-miroir (19) en réponse à des signaux électriques émis par ledit lecteur opto-électronique (10), et une source d'alimentation autonome (3a) alimentant le lecteur opto-électronique (10) et les moyens d'actionnement (26) du micro-miroir (19);
   - le module (C) comprend au moins un émetteur opto-électronique de lumière (2, 16) et un lecteur opto-électronique (23), associé à l'unité de traitement (24) pour les signaux électriques émis par ce lecteur opto-électronique (23) en réponse à des signaux lumineux, l'alimentation de l'émetteur opto-électronique (2, 16) et du lecteur opto-électronique (23) du module (C) étant assurée par des moyens d'alimentation électrique (3);
   - ledit codeur comporte au moins un coupleur bi-directionnel (17) de faisceau optique; et
   - lesdits moyens de transmission optique (B) comportent au moins une fibre optique (7, 13), coopérant avec ledit coupleur bi-directionnel (17), pour appliquuer la lumière émise par le ou les émetteurs opto-électroniques (2, 16) du module (C), d'une part, aux pistes codées optiquement de l'élément (1) porteur de code, et, d'autre part, au micro-miroir (19) du capteur (A) et pour appliquer la lumière (21a) renvoyée par le micro-miroir (19) dans sa position active (19a, audit lecteur opto-électronique (23) du module (C).

2. Codeur de repérage de position selon la revendication 1, caractérisé en ce que le capteur comprend deux émetteurs opto-électroniques (2, 16) de lumière coopérant chacun avec au moins une fibre optique (7, 13) des moyens de transmission (B), au moins une (7) de ces fibres appliquant la lumière émise par le premier émetteur auxdites pistes codées, tandis qu'au moins une autre (13) de ces fibres coopère avec ledit coupleur (17), disposé entre elle et le second émetteur (16), pour appliquer la lumière émise par ce second émetteur sur le micro-miroir (19) et appliquer la lumière (21a) renvoyée par le micro-miroir en position active sur le lecteur (23) du module (C).

3. Codeur de repérage de position selon la revendication 1 ou 2, caractérisé en ce qu'un système optique (10a, 23a) est disposé devant le lecteur opto-électronique (10) du capteur (A) et éventuellement devant le lecteur opto-électronique (23) du module (C).

4. Codeur de repérage de position selon l'une quelconque des revendications précédentes, caractérisé en ce qu'un système optique (6) est disposé entre un émetteur opto-électronique (2, 16) et la ou les fibres optiques (7, 13) transmettant la lumière émise par cet émetteur.

5. Codeur de repérage de position selon l'une quelconque des revendications précédentes, caractérisé en ce que le lecteur opto-électronique (10) du capteur (A) comprend plusieurs photodétecteurs, à savoir au moins un photodétecteur par piste codée de l'élément (1) porteur de code, un circuit d'amplification et de mise en forme des impulsions électriques débitées par le ou les photodétecteurs correspondant à chaque piste en réponse à leur excitation lumineuse, et un registre à décalage à entrées parallèles, à savoir une entrée par piste codée, et à sortie unique série qui attaque les moyens d'actionnement (26) du micro-miroir (19).

6. Codeur de repérage de position selon la revendication 5, caractérisé en ce que l'ensemble électronique du lecteur opto-électronique (10) du capteur (A) est réalisé en une technologie qui permet au lecteur de consommer une énergie électrique réduite, notamment en une technologie du type CMOS.

7. Codeur de repérage de position selon l'une quelconque des revendications 1 à 6, caractérisé en ce que la source d'alimentation autonome (3a) du capteur (A) est constituée par une pile électrique.

8. Codeur de repérage de position selon l'une quelconque des revendications 1 à 6, caractérisé en ce que la source d'alimentation autonome (3a) du capteur (A) est constituée par une cellule photovoltaïque.

9. Codeur de repérage de position selon l'une quelconque des revendications 1 à 6, caractérisé en ce que la source d'alimentation autonome (3a, du capteur (A) est constituée par une source d'alimentation locale par micro-génération.

10. Codeur de repérage de position selon l'une quelconque des revendications précédentes, caractérisé en ce que le micro-miroir (19) de modulation par réflexion est formé par un micro-volet réfléchissant et ses moyens de commande associés, en constituant un ensemble.

11. Codeur de repérage de position selon la revendication 10, caractérisé en ce que le micro-volet réfléchissant est réalisé en aluminium, qu'il oscille autour de son axe et qu'il coopère avec au moins un ressort qui le sollicite normalement dans une position extrême de repos, ses moyens de commande associés le sollicitant pour passer à l'autre position extrême.

**Patentansprüche**

1. Positionsdetektions-Codierer, bestehend aus drei Teilen, nämlich:
- einem Sensorgeber (A), der mit einem Trägerelement (1) eines Positionscodes zusammenwirkt, bestehend aus codierten optischen Streifen;
- einem opto-elektronischen Modul (C) mit einer elektronischen Einheit (24) zur Behandlung der Signale; und aus
- Mitteln (B) zur bidirektionellen optischen Übertragung als optische Faser(n) in dem
- der Sensor (A), um mit den Trägerelement (1) des Positionscodes aus dem codierten optischen Streifen kooperieren zu können, einen opto- elektronischen Leser (10) umfaßt, der gegenüber den codierten Streifen angeordnet ist, um das Licht zu empfangen, welches die transparenten Zonen der Streifen durchquert hat und der das empfangene Licht in elektrische Signale transformiert, einen Mikro-Spiegel (19) zur Modulation durch Reflektion, der sich in Bezug auf die optischen Transmissionsmittel (B) um eine aktive Position (10a) drehen kann, in welche er das Licht zurück zu den optischen Transmissionsmitteln wirft, das er von diesen empfangen hat; Betätigungsmittel (26), um den Mikro-Spiegel (19) in Bezug auf elektrische Signale, die von dem opto-elektronischen Leser (10) ausgehen, drehen zu lassen und eine autonome Versorgungsquelle (3a), die den opto-elektronischen Leser (10) und die Betätigungsmittel (26) des Mikro-Spiegels (19) versorgen;
- das Modul (C) wenigstens einen opto-elektronischen Emitter des Lichtes (2, 16) und einen opto-elektronischen Leser (23) umfaßt, unterstützt durch eine Aufbereitungseinheit (24) für die elektrischen Signale, die von dem opto-elektronischen Leser (23) in Entsprechung der Lichtsignale emittiert werden, wobei die Versorgung des optoelektronischen Emitters (2, 16) und des opto-elektronischen Lesers (23) des Moduls (10) von elektrischen Versorgungsmitteln (3) sichergestellt sind;
- der Codierer weist wenigstens einen bidirektionellen Koppler (17) eines optischen Bündels auf; und
- die optischen Transmissionsmittel (B) weisen wenigstens eine optische Faser (7, 13) auf, die mit dem bidirektionellen Koppler (17) zusammenwirkt, um das von dem oder den opto-elektronischen Emittern (2, 16) des Moduls (C) ausgesante Licht zu richten auf einerseits zum einen Teil auf die codierten optischen Streifen des Trägerelementes (1) des Codes und zum anderen Teil auf den Mikro-Spiegel (19) des Sensorgebers (A) und um das vom Mikro-Spiegel (19) zurückgeworfene Licht (21a) in seiner aktiven Position (19a) auf den opto-elektronischen Leser (23) des Moduls (10) zu lenken.

2. Positionsdetektions-Codierer nach Aspruch 1,
dadurch gekennzeichnet,
daß der Sensorgeber (2) opto-elektronische Lichtemitter (2, 16) aufweist, die jeder für sich mit wenigstens einer optischer Faser (7, 13) der Transmissionsmittel (B) zusammenwirkt, wobei wenigstens eine (7) dieser Fasern das vom ersten Emitter emittierte Licht auf die codierten Streifen richtet, wohingegen wenigstens eine andere (13) dieser Fasern mit dem Koppler (17) zusammenwirkt, der zwischen dieser und dem zweiten Emitter (16) angeordnet ist, um das Licht, das von diesem zweiten Emitter ausgestrahlt wird, auf den Mikro-Spiegel (19) zu richten und um das Licht (21a), welches von dem Mikro-Spiegel in seiner aktiven Position zurückgeworfen wird, auf den Leser (23) des Moduls (10) zu richten.

3. Positionsdetektions-Codierer nach Anspruch 1 oder 2,
dadurch gekennzeichnet,
daß ein optisches System (10a, 23a) vor dem opto-elektronischen Leser (10) des Sensorgebers (A) und ggf. vor dem opto-elektronischen Leser (23) des Moduls (10) angeordnet ist.

4. Positionsdetektions-Codierer nach einem der vorangehenden Ansprüche,
dadurch gekennzeichnet,
daß ein optisches System (6) zwischen einem opto-elektronischen Emitter (2, 16) und dem oder den optischen Fasern (7, 13) angeordnet ist, die das von diesem Emitter ausgesendete Licht leiten.

5. Positionsdetektions-Codierer nach einem der vorangehenden Ansprüche,
dadurch gekennzeichnet,
daß der opto-elektronische Leser (10) des Sensorgebers (A) mehrere Fotodetektoren aufweist, d.h. wenigstens einen Fotodetektor pro codiertem Streifen des Trägerelementes (1) des Codes, einen Kreis zur Verstärkung und der Formgebung der von dem oder den entsprechenden Fotodetektoren an jedem Streifen produzierten Impulse in Entsprechung zu deren Licht-Erregung, und ein Verschiebungsregister an parallelen Eingängen, d.h. ein Eingang pro codierten Streifen und einen gemeinsamen Serienausgang, der die Betätigungsmittel (2, 26) des Mikro-Spiegels (19) antreibt.

6. Positionsdetektions-Codierer nach Anspruch 5,
dadurch gekennzeichnet,
daß die elektronische Ausstattung des opto-elektronischen Lesers (10) des Sensorgebers (A) auf einer Technologie basiert, die es dem Leser erlaubt, eine reduzierte elektrische Energie zu verbrauchen, insbesondere eine Technologie des Typs CMOS.

7. Positionsdetektions-Codierer nach einem der Ansprüche 1 bis 6,
dadurch gekennzeichnet,
daß die autonome Versorgungsquelle (3a) des Sensorgebers (A) von einer elektrischen Zelle gebildet ist.

8. Positionsdetektions-Codierer nach einem der Ansprüche 1 bis 6,
dadurch gekennzeichnet,
daß die autonome elektrische Versorgungsquelle (3a) des Sensorgebers (A) von einer Fotozelle gebildet ist.

9. Positionsdetektions-Codierer nach einem der Ansprüche 1 bis 6,
dadurch gekennzeichnet,
daß die autonome elektrische Versorgungsquelle (3a) des Sensorgebers (A) von einer Versorgungsquelle der Mikrogeneration gebildet ist.

10. Positionsdetektions-Codierer nach einem der vorangehenden Ansprüche,
dadurch gekennzeichnet,
daß der Mikro-Spiegel (19) der Modulation durch Reflektion von einem reflektierenden Mikro-Flügel und deren zugeordneten Steuerungsmittel, wobei diese gemeinsam eine Einheit bilden, gebildet ist.

11. Positionsdetektions-Codierer nach Anspruch 10,
dadurch gekennzeichnet,
daß der reflektierende Mikro-Flügel aus Aluminium besteht, daß er um seine Achse oszilliert und daß er wenigstens mit einer Feder zusammenwirkt, die ihn normalerweise fest in einer gegenüber der Ruhe äußeren Position hält, wobei die Steuerungsmittel die Feder beaufschlagen, um ihn in die andere äußere Position zu bewegen.

**Claims**

1. A position-detecting encoder having three parts, namely:
- a data collector (A) co-operating with a position-code-carrying element (1) having optically encoded tracks;
- an optical-electronic module (C) having on electronic signal-processing unit (41), and
- optical two-way transmission means (B) having one or more optical fibres;
wherein:
- the collector (A) comprises, for co-operating with the position-code-carrying element (1) having optically encoded tracks: an optical-electronic reader (10) disposed opposite the encoded tracks to receive the light which has passed through the transparent zones of such tracks and converting the received light into electrical signals, a reflection modulation micro-mirror (19) being pivotable relatively to the optical transmission means (B) around an operative position (10a) in whith it reflects to the optical transmission means the light received therefrom; actuating means (26) to pivot the micromirror (19) in response to electrical signals transmitted by the optical-electronic reader (10); and an independent power supply (3a) energizing the optical-electronic reader (10) and the means (26) for actuating the micro-mirror (19);
- the moduls (C) comprises at least one optical-electronic light transmitter (2, 10) and an optical-electronic reader (23) associated with the processing unit (24) for processing the electrical signals output by the reader (23) in response to light signals, the optical-electronic transmitter (2, 16) and the optical-electronic reader (23) of the module (C) being energized by electrical energization means (3);
- the encoder comprises at least one optical-beam type two-way coupler (17) and
- the optical transmission means (8) comprise at least one optical fibre (7, 13) co-operating with the two-way coupler (17) to apply the light transmitted by or each optical-electronic transmitter (2, 16) of the modula (C) to the optically encoded tracks of the code-carrying element (1) and to the micro-mirror (19) of the collector (A) and to apply the light (21a) reflected by the micro-mirror (19) in its operative position (19a) to the optical-electronic reader (23) of the module (C).

2. An encoder according to claim 1, characterised in that the collector comprises two optical-electronic light transmitters (2, 16) each co-operating with at least one optical fibre (7, 13) of the transmission means (B), at least one (7) of the fibres applying the light from the first transmitter to the encodes tracks while at least one other (13) of the fibres co-operates with the coupler (17) disposed between such fibre and the second transmitter (16) to apply the light therefrom to the micro-mirror (19) and to apply lights (21a) reflected by the micro-mirror in its inoperative position to the reader (23) of the module (C).

3. An encoder accorrding to claim 1 or 2, characterised in that the optical system (10a, 23a) is disposed before the reader (10) of the collector (A) and possibly before the reader (23) of the module (C).

4. An encoder according to any of the previous claims, characterised in that an optical system (6) is disposed between an optical-electronic transmitter (2, 16) and the or each optical fibre (7, 13) transmitting the light fron the latter transmitter.

5. An encoder according to any of the previous claims, characterised in that the reader (10) of the collector (A) comprises a number of photodetectors, viz., at least one photodetector per encoded track of the code-carrying element (1), a circuit for amplifying and shaping the electrical signals output by the or each photodetector corresponding to each track in respons to their photo-excitation, and a shift register having parallel inputs, viz., one input per encoded track, and a single series output which drives the means (26) for actuating the micro-mirror (19).

6. An encoder according to claim 5, characterised in that the electonic system of the reader (10) of the collector (A) is embodied by means of a technology enabling the reader to colume a reduced amount of electrical energy, notably by a technology of the CMOS kind.

7. An encoder accordinf to any of claims 1 - 6, characterised in that the independent power supply (3a) of the collector (A) is in the form of an electric cell.

8. An encoder according to any of claims 1 - 6, characterised in that the independent power supply of the collector (A) is in the form of a photovoltaic cell.

9. An encoder according to any of claims 1 - 6, characterised in that the independent power supply (3a) of the collector (A) is a local microgeneration type supply.

10. An encoder according to any of the previous claim, characterised in that the micro-mirror (19) is in the form of a reflecting micro-flap and its assosiated actuating means forming a whole.

11. An encoder according to claim 10, characterised in that the reflecting micro-flap is made of aluminium, oscillates around its axis and co-operates with at least one spring normaly urging it into an inoperative end position, its associated actuating means urging it to move into its other end position.

# FIG.1.

# FIG.2.